(19) Europäisches Patentamt / European Patent Office / Office européen des brevets

(11) **EP 2 263 114 B1**

(12) **EUROPÄISCHE PATENTSCHRIFT**

(45) Veröffentlichungstag und Bekanntmachung des Hinweises auf die Patenterteilung:
**08.06.2011 Patentblatt 2011/23**

(21) Anmeldenummer: **09722598.1**

(22) Anmeldetag: **05.03.2009**

(51) Int Cl.:
**G02C 7/02** $^{(2006.01)}$

(86) Internationale Anmeldenummer:
**PCT/EP2009/001571**

(87) Internationale Veröffentlichungsnummer:
**WO 2009/115191 (24.09.2009 Gazette 2009/39)**

(54) **UMSKALIERUNG DES SOLLASTIGMATISMUS FÜR ANDERE ADDITIONEN**

RESCALING OF THE TARGET ASTIGMATISM FOR OTHER ADDITIONS

TRANSPOSITION DE L'ASTIGMATISME PRESCRIT À D'AUTRES ADDITIONS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **20.03.2008 DE 102008015189**

(43) Veröffentlichungstag der Anmeldung:
**22.12.2010 Patentblatt 2010/51**

(73) Patentinhaber: **Rodenstock GmbH**
**80469 München (DE)**

(72) Erfinder:
- **ALTHEIMER, Helmut**
  **87650 Baisweil-Lauchdorf (DE)**
- **BECKEN, Wolfgang**
  **81541 München (DE)**
- **BICHLER, Robert**
  **47839 Krefeld (DE)**
- **ESSER, Gregor**
  **81735 München (DE)**
- **ZIMMERMANN, Martin**
  **85253 Erdweg-Kleinberghofen (DE)**
- **BROSIG, Jochen**
  **85604 Zorneding (DE)**
- **UTTENWEILER, Dietmar**
  **82057 Icking (DE)**

(74) Vertreter: **Müller-Boré & Partner**
**Patentanwälte**
**Grafinger Straße 2**
**81671 München (DE)**

(56) Entgegenhaltungen:
**WO-A-2004/086125    DE-A1- 19 511 613**
**US-A- 2 878 721**

**Beschreibung**

Die Erfindung betrifft ein computerimplementiertes Verfahren zum Erzeugen bzw. Berechnen eines Designs für ein progressives Brillenglas mittels einer Transformation eines vorgegebenen Startdesigns sowie ein Verfahren zum Herstellen eines progressiven Brillenglases nach dem so berechneten Design. Ferner betrifft die Erfindung entsprechende Vorrichtungen, Computerprogrammerzeugnisse, Speichermedien sowie eine Verwendung eines Brillenglases, welches nach dem erfindungsgemäßen Verfahren hergestellt ist.

Eine modell- bzw. designbasierte Optimierung eines progressiven Brillenglases (Gleitsichtglases) erfolgt durch Minimierung einer Zielfunktion, in welcher Sollwerte eines oder mehrerer Abbildungsfehler (z.B. Refraktionsfehler, astigmatischer Fehler) als Zielwerte eingehen. Die in die Zielfunktion eingehenden Ziel- bzw. Sollwerte des zumindest einen Abbildungsfehlers und insbesondere des astigmatischen Fehlers charakterisieren das Design eines Brillenglases.

Um Gläser mit unterschiedlichen Designs, d.h. unterschiedlichen Brechwert- und/oder Astigmatismusverteilungen, zu erzeugen, müssen diese unterschiedlichen Modell- bzw. Sollvorgaben erzeugt und damit die Optimierungen durchgeführt werden. Nach dem Stand der Technik werden für jedes neu zu entwickelnde Design eigene Sollvorgaben (Designs) erarbeitet und hinterlegt. Gemäß den herkömmlichen Verfahren werden ungefähr 72 bis 84 unterschiedliche progressive Designs pro Brechzahl (Material) benötigt, welche sich insbesondere in der Addition und Wirkung im Fernbezugspunkt (Fernteilwirkung) unterscheiden.

Das Erstellen und die Logistik der vielen unterschiedlichen Designs beim Hersteller sind jedoch sehr aufwendig.

Eine Aufgabe der Erfindung ist es, ein schnelles und effizientes Verfahren zum Berechnen bzw. Erzeugen eines Brillenglasdesigns, sowie ein Verfahren zur Herstellung eines Brillenglases nach dem so berechneten Brillenglasdesign bereitzustellen. Es ist ferner eine Aufgabe der Erfindung, eine entsprechende Vorrichtung zum Herstellen eines Brillenglases sowie entsprechende Computerprogrammerzeugnis und Speichermedien bereitzustellen.

Diese Aufgaben werden durch ein Verfahren zum Erzeugen bzw. Berechnen eines Designs für ein progressives Brillenglas mit den Merkmalen gemäß Anspruch 1, eine Vorrichtung zum Erzeugen bzw. Berechnen eines Designs für ein progressives Brillenglas mit den Merkmalen gemäß Anspruch 7, ein Computerprogrammerzeugnis mit den Merkmalen gemäß Anspruch 8, ein Speichermedium mit den Merkmalen gemäß Anspruch 9, ein Verfahren zum Herstellen eines progressiven Brillenglases mit den Merkmalen gemäß Anspruch 19, eine Vorrichtung zum Herstellen eines Brillenglases mit den Merkmalen gemäß Anspruch 12, ein Computerprogrammerzeugnis mit den Merkmalen gemäß Anspruch 13, ein Speichermedium mit den Merkmalen gemäß Anspruch 14 sowie eine Verwendung eines Brillenglases mit den Merkmalen gemäß Anspruch 15 gelöst. Bevorzugte Ausführungsformen sind Gegenstand der Unteransprüche.

Gemäß der Erfindung wird ein computerimplementiertes Verfahren zum (automatischen) Erzeugen bzw. Berechnen eines Designs für ein progressives Brillenglas mit einer Addition $Add$ vorgeschlagen, wobei das Design eine Sollastigmatismusverteilung $A_{Add}(u, y)$ für die Addition $Add$ umfaßt, umfassend folgende Schritte:

- Festlegen eines Startdesigns umfassend:

    - Vorgaben für den Verlauf einer Hauptlinie;
    - eine Start-Sollastigmatismusverteilung $A_{Add_B}(u, y)$ für eine vorgegebene Basisaddition $Add_B$, wobei $Add_B \neq Add$ ist;

- Berechnen der Sollastigmatismusverteilung $A_{Add}(u, y)$ für die Addition $Add$ mittels einer Transformation der Start-Sollastigmatismusverteilung $A_{Add_B}(u, y)$, wobei die Transformation der Start-Sollastigmatismusverteilung $A_{Add_B}(u, y)$ eine Multiplikation $sA_{Add_B}(u, y)$ der Start-Sollastigmatismusverteilung $A_{Add_B}(u, y)$ mit einem Skalierungsfaktor $s$ umfaßt,

und wobei

$$s = t\frac{Add}{Add_B};$$

$t$ einen Faktor bezeichnet, welcher eine Funktion $t = t(Add, F, Add_B)$ der vorgegebenen Addition $Add$ und/oder der Fernteilwirkung F und/oder der Basisaddition $Add_B$ ist, wobei $t = 1$ für $Add$ $Add_B$ gilt; und
$x$ die horizontale Koordinate;
$y$ die vertikale Koordinate; und
$u$ den horizontalen Abstand eines Punktes $(x, y)$ von der Hauptlinie, wobei auf der Hauptlinie $u = 0$ gilt;

bezeichnen.

Die Optimierung von progressiven Brillengläsern erfolgt in der Regel durch Minimierung einer Zielfunktion, in welcher Ziel- bzw. Sollwerte für zumindest einen Abbildungsfehler (insbesondere Zielwerte für die astigmatische Abweichung) des progressiven Brillenglases eingehen. Die in die Zielfunktion eingehenden Ziel- bzw. Sollwerte des zumindest einen Abbildungsfehlers und insbesondere der astigmatischen Abweichung charakterisieren das Design eines Brillenglases.

Eine designbasierte Optimierung eines progressiven Brillenglases kann zum Beispiel durch Minimierung einer Zielfunktion der Form:

$$F(\bar{x}) = \sum_{i=1}^{m} \left[ g_{i,Ast} (Ast_i - Ast_{i,Soll})^2 + \ldots \right]$$

oder der Form:

$$F(\bar{x}) = \sum_{i=1}^{m} \left[ g_{i,\Delta R} (\Delta R_i - \Delta R_{i,Soll})^2 + g_{i,Ast} (Ast_i - Ast_{i,Soll})^2 + \ldots \right]$$

erfolgen.

In den obigen Formeln bezeichnen:

$\Delta R_{i,Soll}$    den Sollwert des lokalen Refraktionsfehlers an der $i$-ten Bewertungsstelle;

$\Delta R_i$    den tatsächlichen lokalen Refraktionsfehler an der $i$-ten Bewertungsstelle;

$Ast_{i,Soll}$    den Sollwert der lokalen astigmatischen Abweichung bzw. des lokalen astigmatischen Fehlers an der $i$-ten Bewertungsstelle;

$Ast_i$    die tatsächliche lokale astigmatische Abweichung bzw. der tatsächliche lokale astigmatische Fehler an der $i$-ten Bewertungsstelle;

$g_{i,\Delta R}$    die lokale Gewichtung des Refraktionsfehlers an der $i$-ten Bewertungsstelle;

$g_{i,\Delta st}$    die lokale Gewichtung der astigmatischen Abweichung bzw. des astigmatischen Fehlers an der $i$-ten Bewertungsstelle.

Der Refraktionsfehler stellt die Differenz des Brechwerts des Brillenglases von dem Brechwert, welcher mittels Refraktionsbestimmung ermittelt wird, dar. Die astigmatische Abweichung bzw. der astigmatische Fehler stellt die Differenz des Astigmatismus des Brillenglases von dem Astigmatismus, welcher mittels Refraktionsbestimmung ermittelt wird, dar. Vorzugsweise handelt es sich dabei um Werte in Gebrauchsstellung des Brillenglases, d.h. unter Berücksichtigung des Systems Brillenglas-Auge.

Die räumliche Verteilung der Sollwerte der Abbildungsfehler (insbesondere des astigmatischen Fehlers) über das Brillenglas, welche in die Optimierung des Brillenglases als Zielwerte eingehen, und gegebenenfalls deren lokale Gewichtungen charakterisieren das Design eines progressiven Brillenglases. Anders ausgedrückt umfaßt das Design eines Brillenglases in der Regel die Verteilung der Sollwerte für eine oder mehrere Abbildungsfehler (insbesondere des astigmatischen Fehlers), welche in die Optimierung des Brillenglases als Zielwerte eingehen.

Dabei spielt insbesondere die Hauptlinie sowie die räumliche Verteilung der Sollwerte des astigmatischen Fehlers über das Brillenglas eine zentrale Rolle bei der Designfestlegung und Optimierung von progressiven Brillengläsern. So erfolgt die Einteilung der Gleitsichtglasdesigns und die Beurteilung der Sehfeldgrößen zweckmäßigerweise anhand der Astigmatismusverteilung bzw. der Verteilung des astigmatischen Fehlers. Die Abgrenzung der inneren Bereiche mit guten Abbildungseigenschaften zu den peripheren Bereichen, in denen höhere Fehler zugelassen werden, erfolgt üblicherweise mit einer festgelegten Sollisoastigmatismuslinie. In der Brillenoptik wird hierfür meist die Isoastigmatismuslinie, entlang welcher der Betrag des Astigmatismus gleich 0,5 dpt ist, verwendet.

Ein Design eines Brillenglases im Sinne dieser Anmeldung umfaßt folglich die räumliche Verteilung der Sollwerte des Astigmatismus oder der astigmatischen Abweichung des Brillenglases über das Optimierungsgebiet des progressiven Brillenglases (d.h. vorzugsweise in einem Gebiet mit einem Durchmesser von mindestens $\pm 20$ mm, vorzugsweise

±40 mm um den Ursprung des gewählten Koordinatensystems). Die räumliche Verteilung der Sollwerte des Astigmatismus oder der astigmatischen Abweichung des Brillenglases über das Optimierungsgebiet des progressiven Brillenglases wird in dieser Anmeldung kurz Sollastigmatismusverteilung genannt.

Ferner kann ein Brillenglasdesign ebenfalls die Verteilung der Sollwerte für Refraktionsfehler, Vergrößerungs-, Verzerrungs- oder anderer Abbildungsfehler umfassen. Dabei kann es sich um Flächenwerte oder vorzugsweise um Gebrauchswerte, d.h. Werte in Gebrauchsstellung des Brillenglases, handeln.

Darüber hinaus kann das Brillenglasdesign ein geeignetes Objektabstandsmodell umfassen. Das Objektabstandsmodell kann beispielsweise eine Objektabstandsfunktion, welche als die reziproke Objektentfernung entlang der Hauptlinie definiert ist, umfassen. Ein standardisiertes Objektabstandsmodel ist z.B. in DIN 58 208 Teil 2 (vgl. Bild 6) angegeben. Das Objektabstandsmodell kann jedoch von diesem standardisierten Objektabstandsmodell abweichen.

Die Berechnung des Designs kann dementsprechend ferner die Berechnung weiterer Sollvorgaben und/oder Designparameter für das Brillenglas umfassen.

Um progressive Brillengläser mit unterschiedlichen Designs (d.h. mit unterschiedlichen Sollvorgaben für die Abbildungsfehler, insbesondere für die astigmatische Abweichung) zu erzeugen, müssen die entsprechenden unterschiedlichen Design- bzw. Sollvorgaben erzeugt bzw.. berechnet und nachfolgend die Optimierungen durchgeführt werden. Ein Erzeugen bzw. Berechnen eines Designs für ein progressives Brillenglas mit einer vorgegebenen Addition *Add* im Sinne dieser Anmeldung umfaßt folglich die Berechnung bzw. Erzeugung der Sollvorgaben bzw. Sollwerte für die einzelnen Abbildungsfehler, welche dem Brillenglasdesign zuzuordnen sind, insbesondere der Sollvorgaben für die astigmatische Abweichung bzw. Sollastigmatismus für die vorgegebene Addition.

Herkömmlicherweise werden für jedes neu zu entwickelnde Brillenglas bzw. eine Brillenglasserie mehrere Sollvorgaben (Designs) einzeln erarbeitet und hinterlegt. Dabei werden in der Regel für jede Addition und für mehrere vorgegebene Wirkungsbereiche unterschiedliche Designs vorgesehen. Das Erstellen von geeigneten Sollvorgaben bzw. Designs und deren Logistik ist jedoch sehr aufwendig. Entgegen der üblichen Vorgehensweise werden gemäß der Erfindung die neuen Sollvorgaben für beliebige Additionen aus bereits hinterlegten, älteren Sollvorgaben für eine vorgegebene Basis-Addition mittels einer einfachen Transformation, welche eine Multiplikation mit einen Skalierungsfaktor umfaßt, abgeleitet. Das Vorgehen nach der Erfindung liefert - trotz der einfachen Methodik - überraschend gute Ergebnisse:

Zunächst wird ein Startdesign (nachfolgend auch Basisdesign genannt) für eine vorgegebene Basis-Addition $Add_B$ (z.B. eine mittlere Addition) festgelegt bzw. erzeugt. Das Startdesign umfaßt insbesondere eine vorgegebene Start-Sollastigmatismusverteilung für die vorgegebene Basisaddition $Add_B$. Ferner umfaßt das Startdesign Vorgaben für den Verlauf einer Hauptlinie.

Unter Hauptlinie wird eine im wesentlichen gerade oder gewunden verlaufende Linie verstanden, entlang welcher die gewünschte Zunahme des Brechwerts des Brillenglases vom Fern- zum Nahteil erreicht wird. Die Hauptlinie verläuft im wesentlichen mittig zu dem Brillenglas von oben nach unten, d.h. entlang einer im wesentlichen vertikalen Richtung. Die Hauptlinie stellt somit eine Konstruktionslinie im Koordinatensystem der zu optimierenden (objektseitigen oder augenseitigen) Fläche zur Beschreibung der Sollwerte dar. Der Verlauf der Hauptlinie des Brillenglases wird so gewählt, daß sie zumindest in etwa der Hauptblicklinie folgt. Ein Verfahren zum Anpassen der Hauptlinie an die Hauptblicklinie wird z.B. in EP 1 277 079 beschrieben. Unter einer Hauptblicklinie wird die Folge der Durchstoßpunkte der Hauptstrahlen durch die jeweilige Brillenglasfläche beim Blick auf eine Linie verstanden, welche in derjenigen senkrechten Ebene liegt, die den Abstand der beiden Augendrehpunkte halbiert (s.g. Zyklopenaugenebene). Bei der Brillenglasfläche kann es sich um die objekt- oder die augenseitige Fläche handeln. Die Lage der Linie in der Zyklopenaugenebene wird durch das gewählte Objektabstandmodell bestimmt.

Die Sollastigmatismusverteilungen für alle anderen Additionen $Add \neq Add_B$ werden durch ein einfaches Umskalieren der vorgegebenen Start-Sollastigmatismusverteilung (nachfolgend auch Basis-Sollastigmatismusverteilung genannt) in Abhängigkeit von der Addition erhalten. In einer bevorzugten Ausführungsform werden den Sollisoastigmatismuslinien der Start-Sollastigmatismusverteilung einfach andere Werte zugewiesen. So wird z.B. aus der 1,25 dpt Sollisoastigmatismuslinie der Sollastigmatismusverteilung für Addition von 2,5 dpt einfach die 0,5 dpt Sollisoastigmatismuslinie der Sollastigmatismusverteilung für Addition von 1,0 dpt.

Überaschenderweise hat sich herausgestellt, daß es dieses einfache und somit schnelle und effiziente Verfahren ermöglicht, Designs für beliebige Additionen unter Beibehaltung der Designcharakteristiken bzw. Designeigenschaften des StartDesigns zu erzeugen.

Das Startdesign kann für einen vorgegebenen bzw. vorgebaren Wirkungsbereich festgelegt werden. Der Wirkungsbereich für das Startdesign kann in breiten Grenzen variieren. In einem Extremfall kann ein einziges Startdesign für den gesamten Wirkungsbereich einer Produktlinie, z.B. für einen Wirkungsbereich von -10 bis +10 dpt, festgelegt werden. Alternativ können jeweils ein Startdesign für den Minusbereich (d.h. für Wirkung < 0 dpt) und ein Startdesign für den Plusbereich (d.h. für Wirkung > 0 dpt) festgelegt werden. In einer anderen, bevorzugten Ausführungsform werden mehrere Startdesigns jeweils für den Minus- und Plusbereich festgelegt werden. Der Wirkungsbereich, für welchen ein Startdesign festgelegt wird, kann beispielsweise ein Wirkungsbereich von 10 dpt, von 5 dpt oder von 3 dpt sein. Andere Wirkungsbereiche sind ebenfalls möglich.

Die Sollastigmatismusverteilung kann in einem geeigneten Koordinatensystem angegeben werden, beispielsweise in einem kartesischen Koordinatensystem $\{x, y\}$ (d.h. in der Form $A_{Add}(x, y)$ bzw. $A_{Add_B}(x, y)$) oder bevorzugt in einem Koordinatensystem der zu optimierenden Fläche des Brillenglases, welches auf die Hauptlinie bezogen ist (d.h. in der Form $A_{Add}(u, y)$ bzw. $A_{Add_B}(u, y)$).

Hierbei bezieht sich das Koordinatensystem $\{x, y\}$ beispielsweise auf ein (kartesisches) Koordinatensystem in der zu optimierenden (objektseitigen oder augenseitigen) Fläche des Brillenglases, wobei der Ursprung des Koordinatensystems beispielsweise mit dem geometrischen Mittelpunkt des (rohrunden) Brillenglases oder mit dem Zentrier- oder Anpaßpunkt des Brillenglases zusammenfällt. Die vertikale (" $y$ ") und horizontale (" $x$ ") Achse liegen in der tangentialen Ebene zu der jeweiligen (augenseitigen oder objektseitigen) Fläche des Brillenglases in dem geometrischen Mittelpunkt bzw. dem Zentrier- bzw. Anpaßpunkt. Die vertikale Richtung bezieht sich vorzugsweise auf die vertikale Richtung in Gebrauchsstellung des Brillenglases, wobei das Brillenglas beispielsweise in einer durchschnittlichen Gebrauchsstellung (wie z.B. in DIN 58 208 Teil 2 definiert) oder in einer individuellen Gebrauchsstellung angeordnet ist. Vorzugsweise ist das Brillenglas in einer individuellen Gebrauchsstellung angeordnet.

Es ist selbstverständlich möglich, die räumliche Verteilung der Abbildungsfehler in anderen geeigneten Koordinatensystemen anzugeben. Insbesondere ist es bevorzugt, die Sollastigmatismusverteilung (und andere Optimierungswerte) im Koordinatensystem der zu optimierenden Fläche bezüglich der Hauptlinie (wobei auf der Hauptlinie $u = 0$ gilt) und nicht bezüglich der $y$ - Achse ($x = 0$) anzugeben.

Dementsprechend wird eine Koordinatentransformation $\{x, y\} \rightarrow \{u, y\}$, $x = x_{HL} + u$ durchgeführt und alle Berechnungen in dem Koordinatensystem $\{u, y\}$ vorgenommen. Hierbei bezeichnet $u$ den horizontalen Abstand eines Punktes $(x, y)$ von der vorgegebenen Hauptlinie und $x_{HL}$ die horizontale Koordinate eines Punktes auf der Hauptlinie. In dem Koordinatensystem $\{u, y\}$ haben die Punkte der Hauptlinie Koordinaten $(u = 0, y)$. Die horizontale Koordinate $x_{HL}$ eines Punktes auf der Hauptlinie kann beispielsweise eine eindimensionale Funktion der vertikalen Koordinate $y$ sein, d.h. $x_{HL} = f_{H}L(y)$. Durch Vorgabe der Funktion $f_{HL}(y)$ wird der Verlauf der Hauptlinie vorgegeben.

Werden die Sollwerte bzw. die Optimierungssollwerte in Bezug auf die Hauptlinie vorgegeben, ist es bei einer Änderung der zu berücksichtigenden Gebrauchsstellung des Brillenglases, insbesondere bei einer Änderung der Pupillendistanz, des Hornhautscheitelabstands, der Vorneigung, des Objektabstandsmodells, etc., ausreichend, lediglich einen Abgleich der Hauptlinie an die veränderte Hauptblicklinie durchzuführen. Die Sollwerte bzw. die Optimierungssollwerte werden dann automatisch angepaßt.

Die Berechnung des Designs kann ferner die Berechnung weiterer Sollvorgaben und/oder Designparameter für das Brillenglas umfassen.

Das Startdesign kann dementsprechend räumliche Verteilungen der Sollwerte weiteren optischen Eigenschaften oder Abbildungsfehler (z.B. Brechwert- oder Refraktionsfehler, Vergrößerung, Verzerrung, RMS ("Root Mean Square") der Wellenaberrationsfunktion, HOA ("Higher Order Abberations" bzw. Aberrationen höherer Ordnung wie z.B. Koma, sphärische Aberration, u.s.w.)) und/oder weitere Optimierungsparameter (z.B. Anzahl und Lage der Bewertungspunkte, Größe des Optimierungsgitters, lokale Gewichtungen der Bewertungsstellen, relative lokale Gewichtungen der Sollwerte zueinander, etc.) umfassen. Das Berechnen bzw. Erzeugen eines Designs für ein Brillenglas kann entsprechend die Berechnung bzw. Erzeugung der Sollvorgaben bzw. Sollwerte für weitere Abbildungsfehler umfassen, welche dem individuellen Brillenglasdesign zuzuordnen sind (z.B. Brechwert- oder Refraktionsfehler). Die weiteren optischen Eigenschaften oder Abbildungsfehler, wie z.B. Brechwert- oder Refraktionsfehler, Vergrößerung, Verzerrung, RMS, HOA, etc., können direkt in die Zielfunktion aufgenommen werden.

Vorzugsweise bleiben die zusätzlichen Sollvorgaben und/oder Optimierungsparameter des Startdesigns unverändert.

Das Ergebnis der Multiplikation der Start-Sollastigmatismusverteilung $A_{Add_B}(u, y)$ mit dem Skalierungsfaktor $s$ ergibt vorzugsweise unmittelbar die zu berechnende Sollastigmatismusverteilung $A_{Add}(u, y)$ des Designs für ein progressives Brillenglas mit einer Addition $Add$. In anderen Worten gilt:

$$A_{Add}(u, y) = sA_{Add_B}(u, y)$$

Die Transformation der Start-Sollastigmatismusverteilung $A_{Add_B}(u, y)$ kann jedoch weitere Transformationen $\mathcal{S}$ der Start-Sollastigmatismusverteilung $A_{Add_B}(u, y)$ umfassen, z.B.:

$$A'_{Add}(u, y) = sA_{Add_B}(u, y);$$

und

$$A_{Add}(u, y) = \Im(A'_{Add}(u, y)).$$

So ist es zum Beispiel möglich, die mit einem Skalierungsfaktor multiplizierte Start-Sollastigmatismusverteilung $A'_{Add}(u, y) = sA_{Add_B}(u, y)$ weiter in Abhängigkeit von variabel einstellbaren, vertikalen Positiorien des Fern- und/oder Nahbezugspunktes derart zu transformieren, daß das zu berechnende Brillenglasdesign die geforderte, vertikale Position des Fern- und/oder Nahbezugspunkts aufweist. Dabei weist ein Brillenglasdesign eine vorgegebene räumliche Position des Fern- und/oder Nahbezugspunkts auf, wenn in dem jeweiligen Bezugspunkt die vorgeschriebenen bzw. für den Brillenträger erforderlichen Werte für die Fern- und/oder Nahteilwirkungen (welche z.B. mittels Refraktionsbestimmung ermittelt werden) erreicht werden. Anders ausgedrückt sollen im Fern- und/oder Nahbezugspunkt die dem Design zugeordneten Abbildungsfehler (insbesondere astigmatische Abweichung und Refraktionsfehler) möglichst klein (vorzugsweise im wesentlichen Null) sein. Die weitere Transformation $\Im$ kann z.B. eine Streckung oder eine Stauchung der Sollastigmatismusverteilung $A'_{Add}(u, y)$ in vertikaler Richtung umfassen. Eine solche Transformation in vertikaler Richtung ist in der Patentanmeldung PCT/EP2008/000585 beschrieben.

Mit dem Faktor $t$ können designspezifische Unterschiede bezüglich der Addition und der Fernteilwirkung relativ einfach berücksichtigt werden. Allgemein kann der Faktor $t$ eine Funktion der Addition $Add$, Fernteilwirkung $F$ und der Basisaddition $Add_B$ sein.

Die Werte der Funktion $t(F,Add,Add_B)$ können mittels einer zweidimensionalen Interpolation zwischen vorgegebenen Grenzwerten der Funktion $t$ ermittelt werden. Die Funktion $t = t(Add, F, Add_B)$ kann z.B. als eine geeignete zweidimensionale Funktion $t = t(a, f)$ der Variablen $a = Add - Add_B$ und $f = F - F_B$, wobei $F_B$ eine vorgegebene Basis-Fernteilwirkung ist, dargestellt werden. Die Taylorentwicklung der Funktion $t = t(a, f)$ hat dann die Form:

$$t = t_0 + t_{10}f + t_{01}a + t_{20}f^2 + t_{02}a^2 + t_{11}fa + ...,$$

mit den Koeffizienten $t_0, t_{10}, t_{01}, t_{20}, t_{02}, t_{11}, ...$

Geeignete zweidimensionale Funktionen sind z.B. in dem Buch "Table Curve 3D", ISBN 1-56827-199-9 beschrieben.

Die Werte der Funktion $t=t(Add, F, Add_B)$ für eine Addition $Add$ und eine Fernteilwirkung $F$ können mittels einer zweidimensionalen Interpolation bzw. Extrapolation zwischen vorgegebenen Eckwerten bzw. Grenzwerten für die Funktion $t$ ermittelt werden. So können beispielsweise die Eck- bzw. Grenzwerte $t_1 = t(F_{min}, Add_{min})$, $t_2 = t(F_B, Add_{min})$, $t_3 = t(F_{max}, Add_{min})$, $t_4 = t(F_{min}, Add_B)$, $t_5 = t(F_B, Add_B)$, $t_6 = t(F_{max}, Add_B)$, $t_7 = t(F_{min}, Add_{max})$, $t_8 = t(F_B, Add_{max})$, $t_9 = t(F_{max} Add_{max})$ vorgegeben werden und die Zwischenwerte der Funktion $t(F, Add)$ bzw. $t(f, a)$ mittels einer Interpolation (z.B. einer linearen, quadratischen oder kubischen Interpolation) ermittelt werden.

Der Faktor $t$ kann ebenfalls eine Funktion $t = t(Add, Add_B)$ lediglich der vorgegeben Addition und der Basisaddition sein. Somit können beispielsweise designspezifische Unterschiede bezüglich der Addition innerhalb eines Wirkungsbereiches relativ einfach berücksichtigt werden.

Für die Funktion $t = t(Add, Add_B)$ gilt sinngemäß das oben Gesagte in Bezug auf die allgemeine Funktion $t = t(Add, F, Add_B)$ mit der Maßgabe, daß die Funktion $t$ eine Funktion einer unabhängigen Variablen ist. So können zum Beispiel die Werte $t = t(Add, Add_B)$ für eine beliebige Addition $Add$ mittels einer Interpolation. (z.B. einer linearen, quadratischen, kubischen oder anderen geeigneten Interpolation) zwischen den vorgegebenen Grenzwerten $t_1 = t(Add_{max}, Add_B)$ und $t_2 = t(Add_{min}, Add_B)$ ermittelt werden.]

In einem einfachen Fall kann der Faktor $t$ eine Konstante sein, zum Beispiel kann die Bedingung $t = const =$

1 erfüllt sein. In diesem Fall ist der Skalierungsfaktor $s = \dfrac{Add}{Add_B}$. Es hat sich herausgestellt, daß es trotz der Einfachheit dieser Transformation möglich ist, Designs für verschiede Additionen unter Beibehaltung der Designcharakteristiken des Startdesigns zu erhalten.

Das Verfahren zum Erzeugen bzw. Berechnen eines Designs für ein progressives Brillenglas kann ferner einen Schritt des Anpassens von wirkungsspezifischen Brillengrößen aufweisen. Die wirkungsspezifischen Brillengrößen umfassen die Basiskurve, das Dickenreduktionsprisma, die Glasdicke und/oder die Brechwertzunahme.

Die Anpassung kann beispielsweise vorab durch Näherungsberechnungen mit hinterlegten Zwischendesigns erfolgen. Die Basiskurvenvorgabe bzw. der Basiskurvenwert kann z.B. aus einer Datenbank; oder in Abhängigkeit von speziellen Eigenschaften des Brillenglases, wie z.B. der minimalen Rückflächenkrümmung, ermittelt werden. Der Basiskurvenwert kann insbesondere in Abhängigkeit von den Rezeptwerten (Shp, Zyl, Achse, Addition) und individuellen Werten, wie z.B. Hornhautscheitelabstand (HSA) festgelegt und in einer Datenbank hinterlegt werden. Das Dickenreduktionsprisma kann z.B. aus einer Mehrzahl von vorab bestimmten Dickenreduktionsprismen (gespeichert z.B. in Form einer Tabelle) ausgewählt, mit einer Vorabrechnung bestimmt und während der Optimierung angeglichen werden.

Gemäß der Erfindung wird ferner eine Vorrichtung zum Erzeugen bzw. Berechnen eines Designs für ein progressives Brillenglas mit einer Addition *Add* bereitgestellt, welche geeignet ist, ein bevorzugtes erfindungsgemäßes Verfahren durchzuführen. Das zu berechnende Design umfaßt eine Sollastigmatismusverteilung $A_{Add}(u, y)$ für die Addition *Add.*

Die Vorrichtung umfaßt:

- Mittel zur Vorgabe eines Startdesigns umfassend:

  - Vorgaben für den Verlauf einer Hauptlinie;
  - eine Start-Sollastigmatismusverteilung $A_{Add_B}(u, y)$ für eine vorgegebene Basisaddition $Add_B$, wobei $Add_B \neq Add$ ist; und

- Berechnungsmittel, welche ausgelegt sind, ein Berechnen der Sollastigmatismusverteilung $A_{Add}(u, y)$ für die Addition *Add* mittels einer Transformation der der Start-Sollastigmatismusverteilung $A_{Add_B}(u, y)$, durchzuführen, wobei die Transformation der Start-Sollastigmatismusverteilung $A_{AddB}(u, y)$ eine Multiplikation $sA_{Add_B}(u, y)$ der Start-Sollastigmatismusverteilung $A_{Add_B}(u, y)$ mit einem Skalierungsfaktor $s$ umfaßt,

wobei:

$$s = t\frac{Add}{Add_B};$$

*t* einen Faktor bezeichnet, welcher eine Funktion $t = t(Add, F, Add_B)$ der vorgegebenen Addition *Add* und/oder der Fernteilwirkung *F* und/oder der Basisaddition $Add_B$ ist, wobei $t = 1$ für $Add = Add_B$ gilt;
*x* die horizontale Koordinate;
*y* die vertikale Koordinate;
*u* den horizontalen Abstand eines Punktes (*x, y*) von der Hauptlinie;

bezeichnen.

Ferner kann die Vorrichtung

- erste Speichermittel, welche ausgelegt sind, das Startdesign bzw. die Start-Sollastigmatismusverteilung $A_{Add_B}(u, y)$ zu speichern; und/oder
- zweite Speichermittel, welche ausgelegt sind, das (abgeleitete) Design bzw. die abgeleitete Sollastigmatismusverteilung $A_{Add}(u, y)$ zu speichern

umfassen.

Ferner umfaßt die Vorrichtung zum Erzeugen bzw. Berechnen eines Designs für ein progressives Brillenglas vorzugsweise Erfassungsmittel, welche ausgelegt sind, individuelle Daten des Brillenträgers zu erfassen.

Ferner wird gemäß der Erfindung ein Computerprogrammerzeugnis sowie ein Speichermedium mit darauf gespeichertem Computerprogramm bereitgestellt, wobei das Computerprogrammerzeugnis bzw. das Computerprogramm ausgelegt ist, wenn geladen und ausgeführt auf einem Computer, ein bevorzugtes Verfahren zum Erzeugen bzw. Berechnen eines Designs für ein progressives Brillenglas durchzuführen.

Ebenfalls wird gemäß der Erfindung ein Verfahren zum Herstellen eines individuellen progressiven Brillenglases mit einer vorgegebenen Addition *Add* vorgeschlagen, umfassend die Schritte:

- Berechnen eines Designs für das progressive Brillenglas mit der Addition *Add* nach einem bevorzugten Verfahren zum Erzeugen bzw. Berechnen eines Designs für ein progressives Brillenglas; und
- Berechnen bzw. Optimieren des progressiven Brillenglases nach dem berechneten Design.

Wie bereits oben dargelegt wurde, erfolgt das (designbasierte) Berechnen bzw. Optimieren des progressiven Brillenglases vorzugsweise durch eine Minimierung einer Zielfunktion, in welcher die zuvor mittels eines bevorzugten Verfahrens zum Erzeugen bzw. Berechnen eines Designs für ein progressives Brillenglas ermittelten Sollastigmatismuswerte und gegebenenfalls weitere Sollwerte als Zielwerte eingehen.

Ferner umfaßt das Herstellungsverfahren:

- Bereitstellen von Flächendaten des berechneten bzw. optimierten Brillenglases; und
- Fertigen des Brillenglases gemäß den bereitgestellten Flächendaten des Brillenglases.

Die Fertigung bzw. Bearbeitung kann mittels numerisch gesteuerten CNC-Maschinen, mittels eines Gießverfahrens, einer Kombination der beiden Verfahren oder nach einem anderen geeigneten Verfahren erfolgen.

Die Berechnung bzw. Optimierung des Brillenglases kann insbesondere unter Berücksichtigung von individuellen Daten des Brillenträgers erfolgen.

Die individuellen Daten eines Brillenträgers, d.h. die individuellen Parameter und/oder die individuellen Anforderungen eines Brillenträgers können z.B. mit einem Beratungstool wie "Consulting FreeSign" der Firma Rodenstock GmbH sehr detailliert abgefragt werden.

Ferner wird gemäß der Erfindung eine Vorrichtung zum Herstellen eines progressiven Brillenglases mit einer vorgegebenen Addition *Add* bereitgestellt, umfassend

- Designberechnungsmittel, welche ausgelegt sind, ein Design für das progressive Brillenglas mit der Addition *Add* nach einem bevorzugten Verfahren zum Erzeugen bzw. Berechnen eines Designs zu berechnen; und
- Optimierungs- bzw. Berechnungsmittel, welche ausgelegt sind, ein Berechnen bzw. Optimieren des progressiven Brillenglases nach dem berechneten Design durchzuführen.

Insbesondere umfassen die Designberechnungsmittel:

- Mittel zur Vorgabe eines Startdesigns umfassend Vorgaben für den Verlauf einer Hauptlinie; und eine Start-Sollastigmatismusverteilung $A_{Add_B}(u, y)$ für eine vorgegebene Basisaddition $Add_B$, wobei $Add_B \neq Add$ ist; und
- Berechnungsmittel, welche ausgelegt sind, ein Berechnen der Sollastigrriatismusverteilung $A_{Add}(u, y)$ für die Addition *Add* mittels einer Transformation der Start-Sollastigmatismusverteilung $A_{Aad_B}(u, y)$, durchzuführen, wobei die Transformation der Start-Sollastigmatismusverteilung $A_{AadB}(u, y)$ eine Multiplikation $sA_{Ada_B}(u, y)$ der Start-Sollastigmatismusverteilung $A_{AddB}(u, y)$ mit einem Skalierungsfaktor s umfaßt,

wobei:

$$s = t\,\frac{Add}{Add_B}\,;$$

$t = t(Add, F, Add_B)$ einen Faktor bezeichnet, welcher eine Funktion der vorgegebenen Addition *Add* und/oder der Fernteilwirkung *F* und/ oder der Basisaddition $Add_B$ ist, wobei $t = 1$ für $Add = Add_B$ gilt;
*x* die horizontale Koordinate;
*y* die vertikale Koordinate;
*u* den horizontalen Abstand eines Punktes (*x, y*) von der Hauptlinie;

bezeichnen.

Ferner können die Designberechnungsmittel

- erste Speichermittel, welche ausgelegt sind, das Startdesign bzw. die Start-Sollastigmatismusverteilung $A_{Add_B}$ ($u$, $y$) zu speichern; und/oder
- zweite Speichermittel, welche ausgelegt sind, das (abgeleitete) Design bzw. die abgeleitete Sollastigmatismusverteilung $A_{Add}$ ($u$, $y$) zu speichern; und/oder

umfassen.

Ferner kann die Vorrichtung zum Herstellen eines Brillenglases Bearbeitungsmittel zum Fertigbearbeiten des Brillenglases umfassen. Die Bearbeitungsmittel können z.B. CNC-gesteuerte Maschinen zur Direktbearbeitung eines Blanks umfassen.

Vorzugsweise weist das fertig bearbeitete Brillenglas eine einfache sphärische oder rotationssymmetrisch asphärische Fläche und eine nach den erfindungsgemäß berechneten Designvorgaben sowie gegebenenfalls individuellen Parametern des Brillenträgers optimierte progressive Fläche auf. Vorzugsweise ist die sphärische oder rotationssymmetrisch asphärische Fläche die Vorderfläche (d.h. die objektseitige Fläche) des Brillenglases. Selbstverständlich ist es jedoch möglich die progressive Fläche auf die Vorderfläche des Brillenglases anzuordnen. Ebenfalls ist es möglich, daß beide Flächen des Brillenglases progressive Flächen sind.

Ferner kann die Vorrichtung zum Herstellen eines individuellen progressiven Brillenglases Erfassungsmittel zum Erfassen von individuellen Daten des Brillenträgers, welche insbesondere Daten bezüglich der individuell für den Brillenträger erforderlichen dioptrischen Wirkung des Brillenglases umfassen.

Gemäß einem weiteren Aspekt der Erfindung wird ein Computerprogrammerzeugnis sowie ein Speichermedium mit darauf gespeichertem Computerprogramm vorgeschlagen, wobei das Computerprogrammerzeugnis bzw. das Computerprogramm ausgelegt ist, wenn geladen und ausgeführt auf einem Computer, ein Verfahren zum Berechnen und Optimieren eines progressiven Brillenglases mit einer vorgegebenen Addition $Add$ durchzuführen, wobei das Verfahren folgende Schritte umfaßt

- Berechnen eines Designs für das progressive Brillenglas mit der Addition $Add$ nach einem bevorzugten Verfahren dem Verfahren zum Erzeugen bzw. Berechnen eines Designs für ein progressives Brillenglas;
- Berechnen bzw. Optimieren des Brillenglases nach dem berechneten Design.

Ein nach einem bevorzugten Herstellungsverfahren hergestelltes Brillenglases kann in einer vorgegebenen durchschnittlichen oder individuellen Gebrauchsstellung des Brillenglases vor den Augen eines bestimmten Brillenträgers zur Korrektur einer Fehlsichtigkeit des Brillenträgers verwendet werden.

Da mit dem erfindungsgemäßen Verfahren unterschiedliche Designvarianten schnell und effizient erzeugt und gegeneinander getestet werden können, kann der Aufwand für die Entwicklung von konventionellen, wirkungsoptimierten oder individuellen progressiven Brillengläsern erheblich reduziert werden. So können z.B. schnell und effizient Designvarianten für z.B. Trageversuche erzeugt werden, da lediglich eine Addition pro Wirkungsbereich vorab erstellt werden muß. Die Designs für alle weiteren Additionen werden aus diesem Start- bzw. Basisdesign mittels einer einfachen Transformation abgeleitet.

Ein weiterer Vorteil des erfindungsgemäßen Verfahrens ist, daß die Designcharakteristika bzw. Designeigenschaften beibehalten werden können. So ist es möglich, eine nahezu 100% Designhaltigkeit innerhalb der verschiedenen Additionen für einen Wirkungsbereich zu erreichen.

Insbesondere sind die Breite der Sehbereiche und die Höhe des maximal auftretenden Astigmatismus eng mit der Brechwertzunahme bzw. Addition des progressiven Brillenglases verknüpft. Je geringer die Addition, desto kleiner der maximal auftretende Astigmatismus und desto breiter die Sehbereiche. Speziell bei niedrigen Additionen kann das zu Problemen bei der Konstruktion und Vorgabe von Sollisoastigmatismuslinien führen, da z.B. ein Wert von z.B. 0,5 dpt häufig viel zu hoch ist. Dieses Problem tritt bei dem erfindungsgemäßen Verfahren zum Erzeugen bzw. Berechnen eines Designs für ein progressives Brillenglas nicht auf. Die Sollisoastigmatismuslinien des transformierten Designs können mittels einer einfachen Skalierung der vorgegebenen Sollisoastigmatismuslinien des Start- bzw. des Basisdesigns erhalten werden.

Designspezifische Unterschiede bezüglich der Addition und gegebenenfalls Fernteilwirkung können einfach und effizient durch den Faktor $t$ berücksichtigt werden.

Ebenfalls ist keine aufwendige und fehlerträchtige mehrdimensionale Interpolation nach Wirkung und Addition zwischen vorab festgelegten Designs bzw. Sollverteilungen, insbesondere Sollastigmatismusverteilungen, mehr notwendig. Es kann höchstens eine lineare Interpolation zwischen zwei Startdesigns unterschiedlicher Wirkung notwendig sein.

Vorzugsweise werden bei der Berechnung des Skalierungsfaktors $s$ die Istadditionen berücksichtigt. Anders ausgedrückt sind die Additionen $Add_B$ und $Add$ die Istadditionen des jeweiligen Brillenglases bzw. Brillenglasdesigns.

Die Istaddition ist als die Differenz der Brillenglaswirkung im Nahbezugspunkt und der Brillenglaswirkung im Fernbezugspunkt definiert. Die Nennaddition bezieht sich auf die Addition der Refraktionsbestimmung. Insbesondere bei Nahgläsern, bei denen die Wirkung im Fernbezugspunkt nicht auf unendliche Objektentfernungen, sondern auf näher liegende Objekte berechnet wird, ist bereits ein Teil der Addition im Fernbezugspunkt vorhanden. Demzufolge ist die Istaddition kleiner als die Nennaddition.

Die Erfindung wird nachfolgend beispielhaft mit Bezug auf die Figuren beschrieben. Es zeigen:

Fig. 1    Eine beispielhafte Vorgehensweise bei der Berechung der Werte der Funktion t mittels einer Interpolation;

Fig. 2    ein Beispiel eines progressiven Brillenglases mit einer Addition von 1,5 dpt, wobei Fig. 2a das Design des Brillenglases zeigt; Fig. 2b den tatsächlichen Astigmatismus des Brillenglases zeigt;

Fig. 3    ein Beispiel eines progressiven Brillenglases mit einer Addition von 2,5 dpt, wobei Fig. 3a das Design des Brillenglases zeigt; Fig. 3b den tatsächlichen Astigmatismus des Brillenglases zeigt;

Fig. 4    ein Beispiel eines progressiven Brillenglases mit einer Addition von 1,5 dpt; Fig. 4a das aus dem in Fig. 3a gezeigten Design abgeleitetes Design des Brillenglases zeigt; Fig. 4b den tatsächlichen Astigmatismus des Brillenglases zeigt;

Fig. 5    ein Beispiel eines progressiven Brillenglases mit einer Basis- Nennaddition von 2,5 dpt;

Fig. 6a    ein Beispiel eines progressiven Brillenglases mit einer Addition von 1,25 dpt;

Fig. 6b    ein Vergleichsbeispiel eines progressiven Brillenglases mit einer Addition von 1,25 dpt;

Fig. 7a    ein Beispiel eines progressiven Brillenglas mit einer Addition von 3,0 dpt;

Fig. 7b    ein Vergleichsbeispiel eines progressiven Brillenglases mit einer Addition von 3,0 dpt.

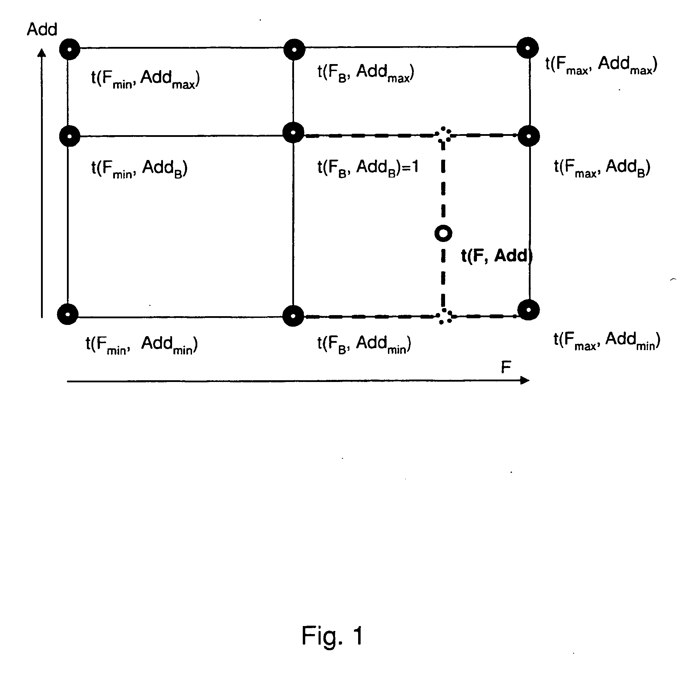

**Fig. 1** illustriert eine beispielhafte Vorgehensweise bei der Berechung der Werte der Funktion $t$ mittels einer Interpolation. Die Eck- bzw. Grenzwerte $t_1 = t(F_{min}, Add_{min})$, $t_2 = t(F_B, Add_{min})$, $t_3 = t(F_{max}, Add_{min})$, $t_4 = t(F_{min}, Add_B)$, $t_5 = t(F_B, Add_B)$, $t_6 = t(F_{max}, Add_B)$, $t_7 = t(F_{min}, Add_{max})$, $t_8 = t(F_B, Add_{max})$ $t_9 = t(F_{max}, Add_{max})$ werden vorgegeben und die Zwischenwerte der Funktion $t(F, Add)$ bzw. $t(f, a)$ mittels einer Interpolation (z.B. einer linearen Interpolation) ermittelt.

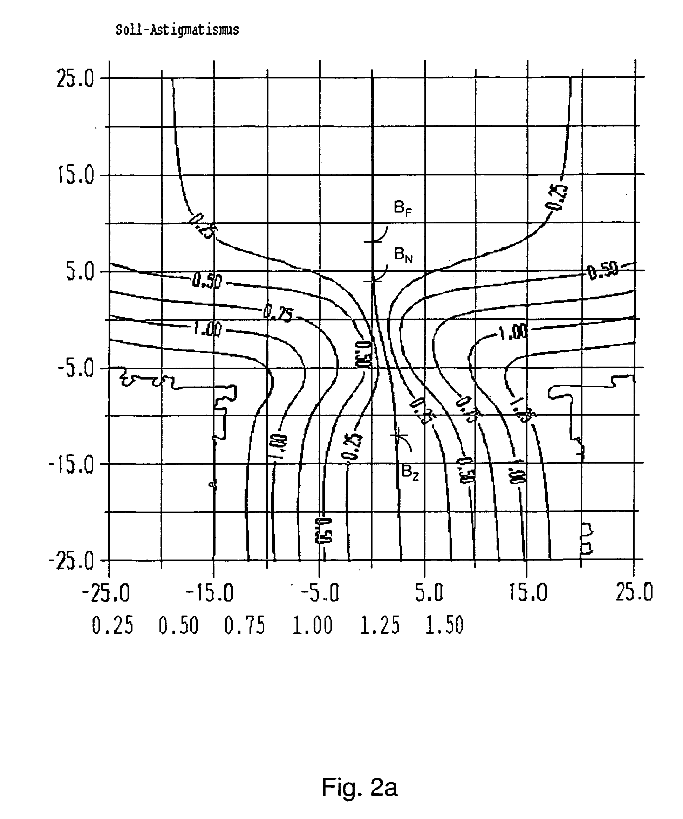

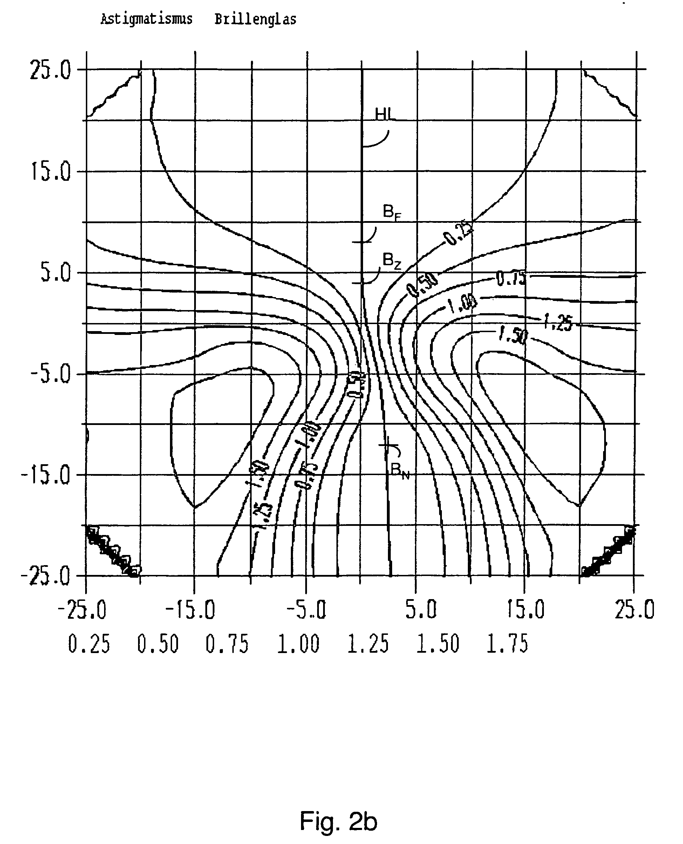

In allen Figuren 2 bis 7 bezieht sich das Koordinatensystem auf das oben beschriebene kartesische Koordinatensystem $\{x, y\}$ der zu optimierenden augenseitigen Fläche des Brillenglases, wobei auf die Abszisse die $x$-Koordinate in mm und auf die Ordinate die $y$-Koordinate in mm aufgetragen ist. Gezeigt werden Isoastigmatismuslinien des Astigmatismus in Gebrauchstellung des Brillenglases (d.h. des Astigmatismus des Systems Brillenglas-Auge) mit einem Abstand von 0,25 dpt. Der Ursprung des Koordinatensystems fällt mit dem geometrischen Mittelpunkt des rohrunden Brillenglases zusammen.

Die Gebrauchsstellung, für welche der Astigmatismus berechnet wurde, ist durch folgende Parameter charakterisiert:

Fassungsscheibenwinkel 4˚
Vorneigung 9˚
Pupillendistanz 64 mm
Hornhautscheitelabstand 13 mm
Objektabstandsmodel:

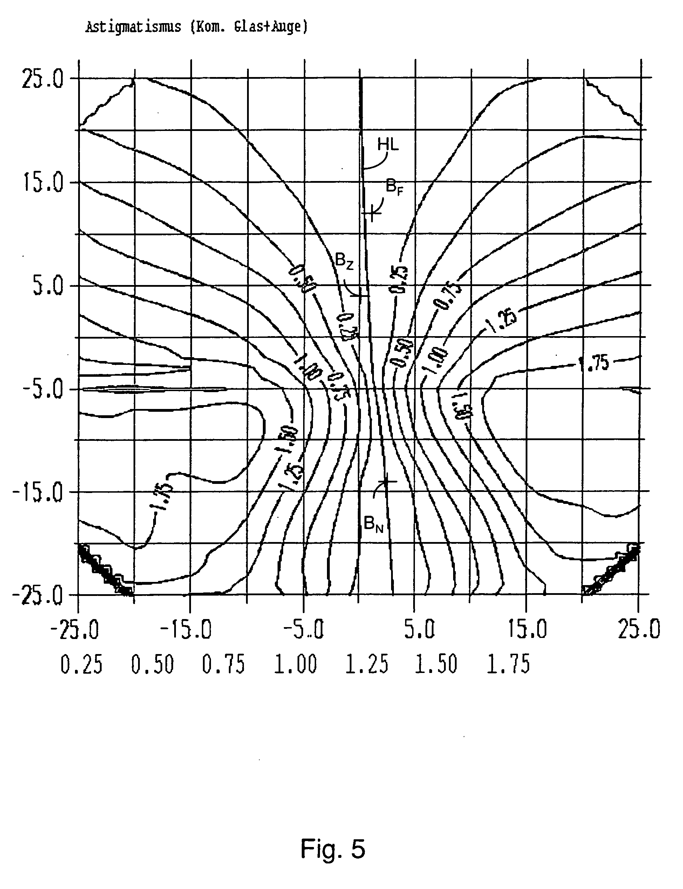

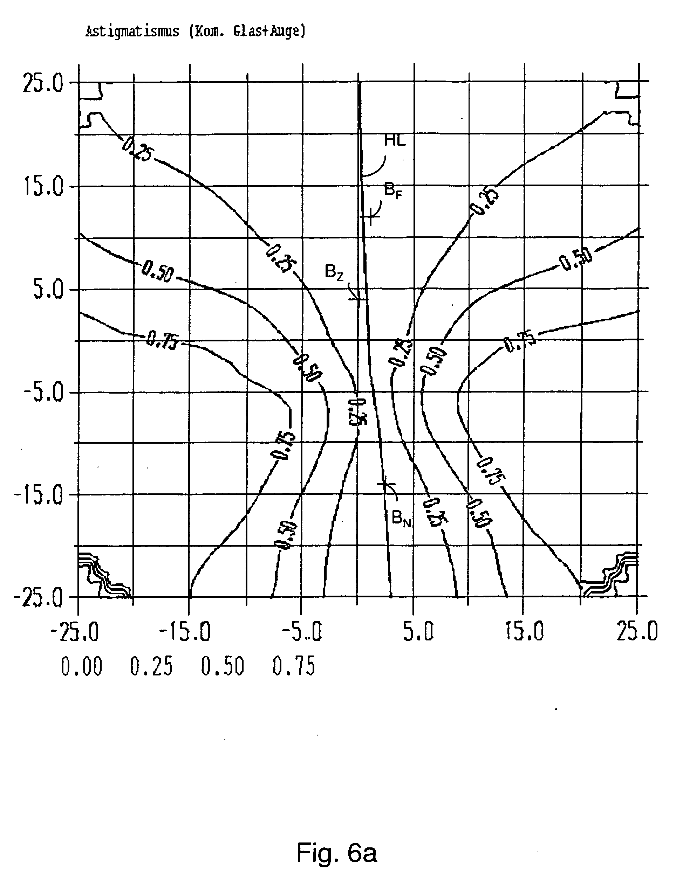

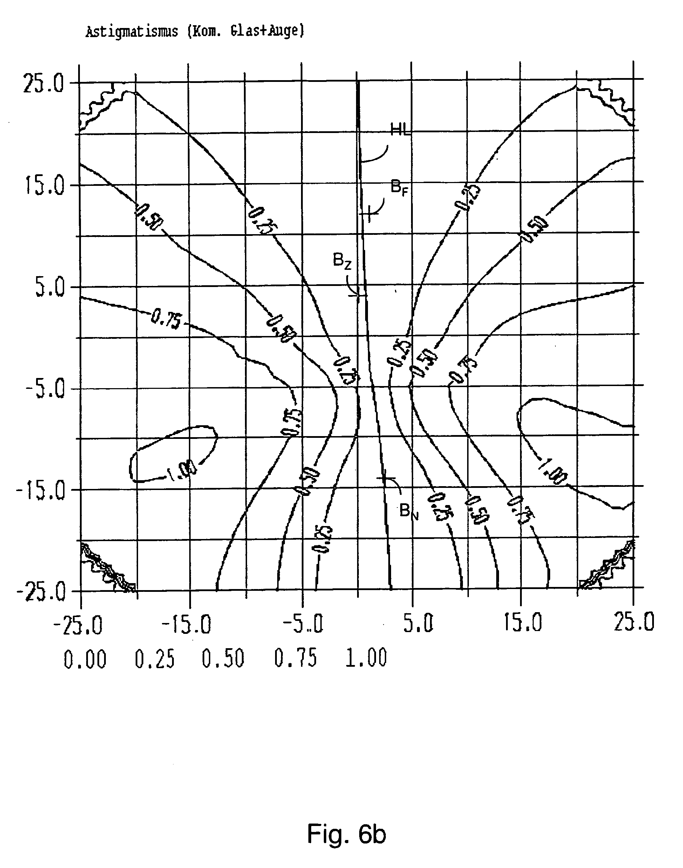

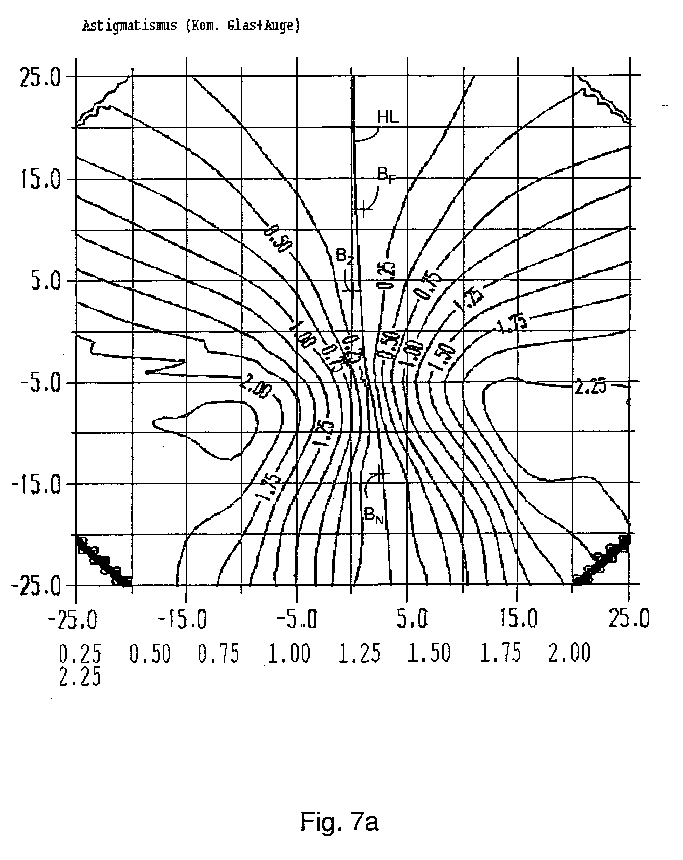

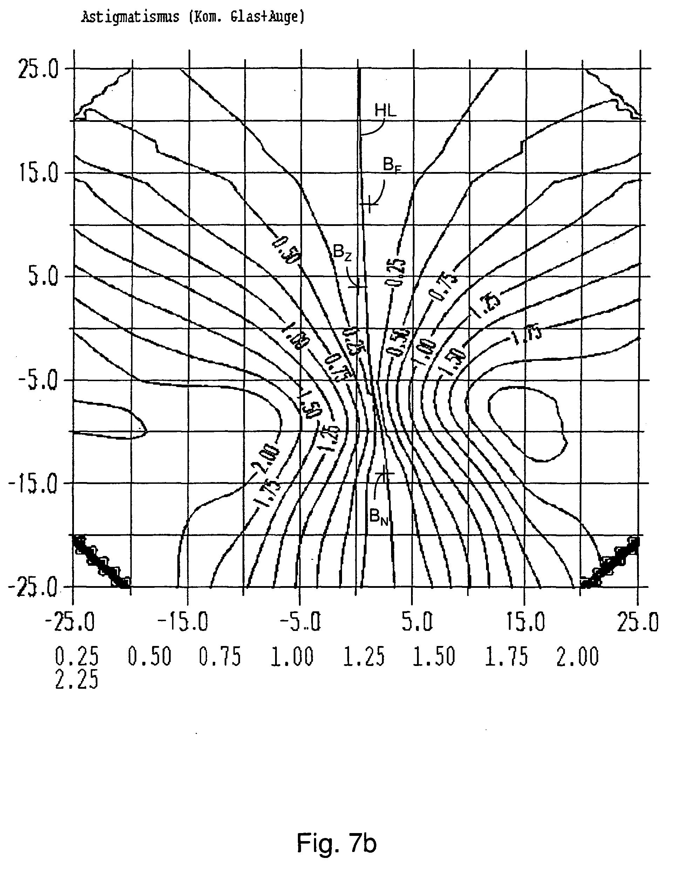

A1 $(B_F)$ = 0,0 dpt; A1 $(B_N)$ = -2,5 dpt für Fig. 2, 3 und 4;
A1$(B_F)$ = -0,4 dpt; A1 $(B_N)$ = -2,5 dpt für Fig. 5 und 6;
A1$(B_F)$ = -0,4 dpt; A1$(B_N)$ = -3,0 dpt für Fig. 7,

wobei A1 die reziproke Objektentfernung bezeichnet.

Es ist selbstverständlich möglich, andere Gebrauchsstellungen zu berücksichtigen.

In Figuren 2 bis 7 bezeichnet das Zeichen $B_F$ den Fernbezugspunkt, das Zeichen $B_Z$ den Zentrier- bzw. Anpaßpunkt, das Zeichen $B_N$ den Nahbezugspunkt und das Zeichen HL die Hauptlinie.

**Fig. 2** zeigt ein Beispiel eines progressiven Brillenglases mit einem Brechungsindex von 1,6, einer Addition von 1,5 dpt und einer Fernteilwirkung von +0,5 dpt, wobei Fig. 2a die Sollastigmatismusverteilung, welche das Design des Brillenglases charakterisiert, und Fig. 2b den tatsächlichen Astigmatismus des Brillenglases, welches nach dem in Fig. 2a gezeigten Design optimiert worden ist, zeigen.

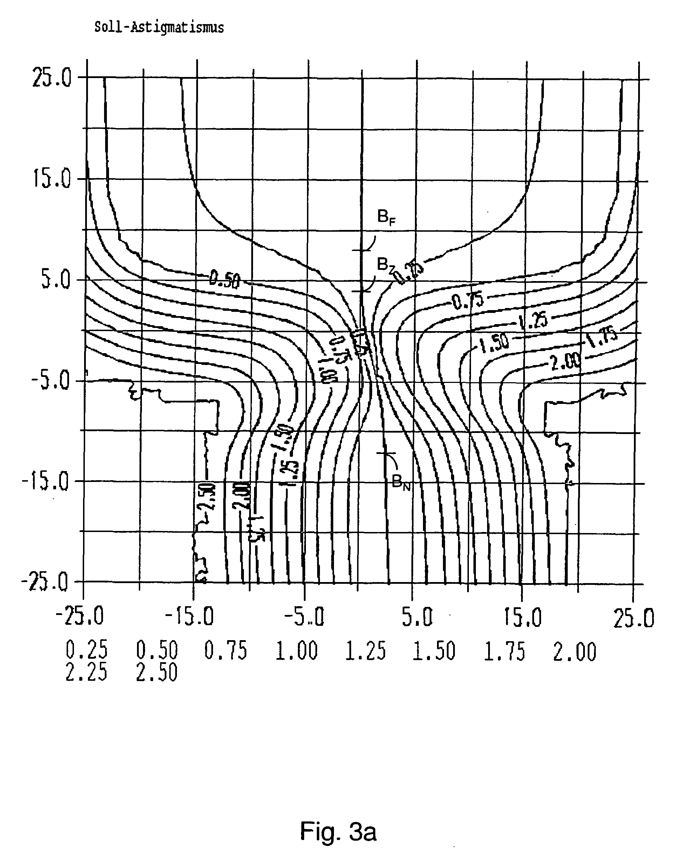

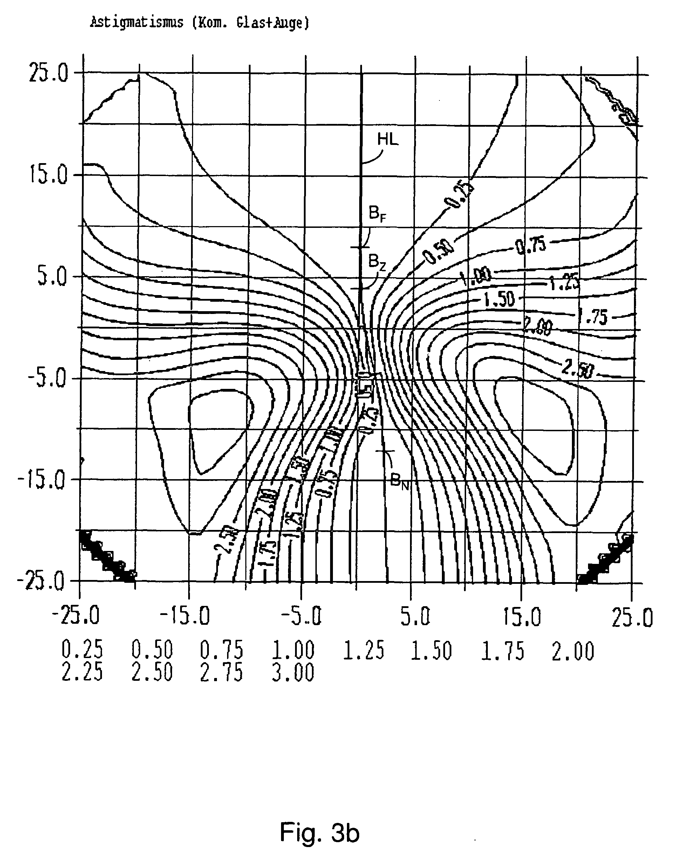

**Fig. 3** zeigt ein Beispiel eines progressiven Brillenglases mit einem Brechungsindex von 1,6, einer Addition von 2,5 dpt und einer Fernteilwirkung von +0,5 dpt, wobei Fig. 3a die Sollastigmatismusverteilung, welche das Design des Brillenglases charakterisiert, und Fig. 3b den tatsächlichen Astigmatismus des Brillenglases, welches nach dem in Fig. 3a gezeigten Design optimiert worden ist, zeigen.

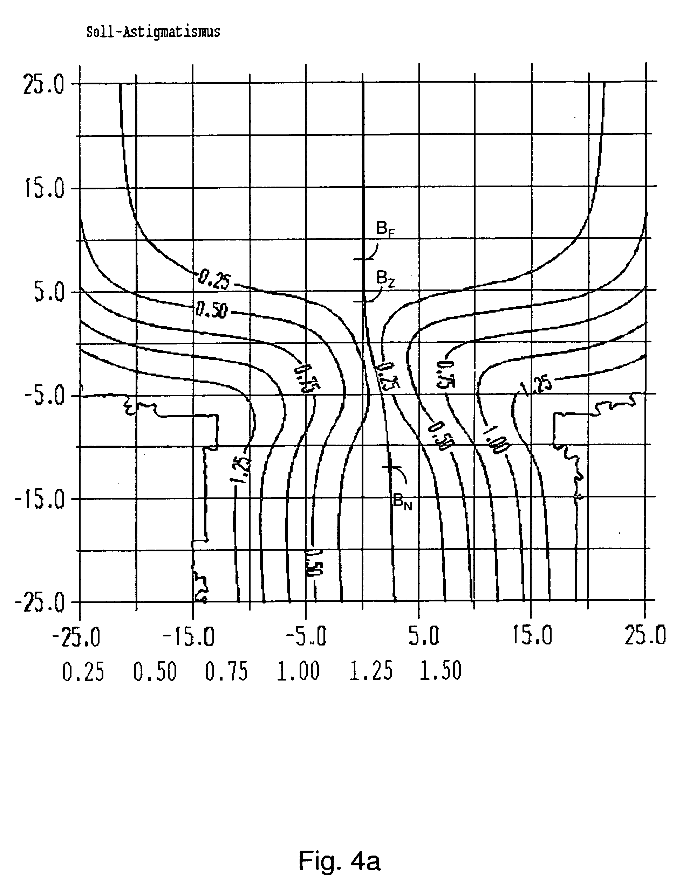

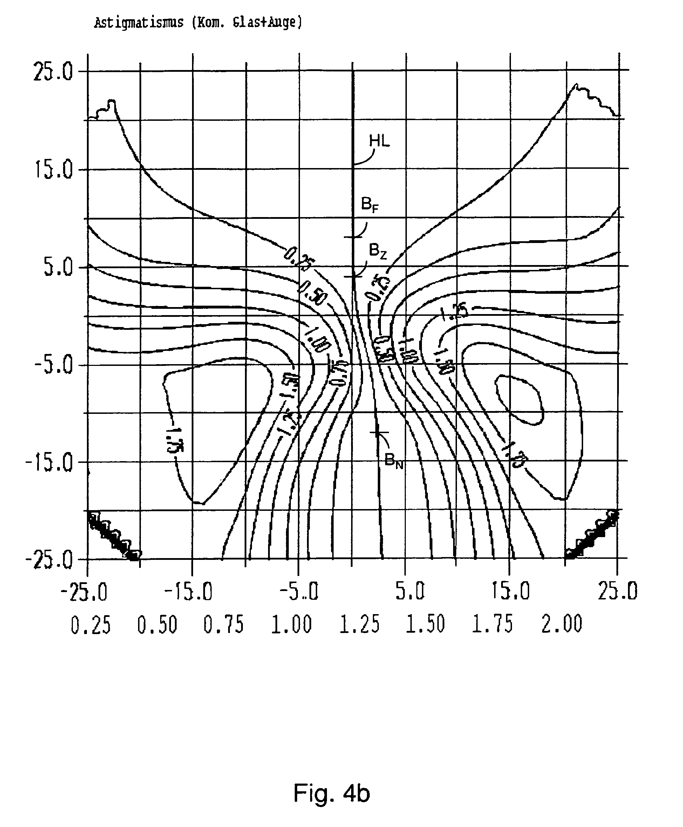

**Fig. 4** zeigt ein Beispiel eines progressiven Brillenglases mit einem Brechungsindex von 1,6, einer Addition von 1,5 dpt und einer Fernteilwirkung von +0,5 dpt, wobei Fig. 4a die Sollastigmatismusverteilung, welche das Design des Brillenglases charakterisiert, und Fig. 4b den tatsächlichen Astigmatismus des Brillenglases, welches nach der in Fig. 4a gezeigten Design optimiert worden ist, zeigen. Die in Fig. 4a gezeigte Sollastigmatismusverteilung ist aus der in Fig. 3a gezeigten Sollastigmatismusverteilung mit einem Skalierungsfaktor $s = \dfrac{1,5}{2,5} = 0,6$ und $t = 1$ erzeugt. Die in Fig. 3a gezeigte Sollastigmatismusverteilung stellt somit die Start- bzw. Basis-Sollastigmatismusverteilung dar.

**Fig. 5** zeigt die Verteilung des tatsächlichen (Ist-) Astigmatismus eines progressives Brillenglas mit einem Brechungsindex von 1,6, einer sphärischen Wirkung von +0,5 dpt und einer Nennaddition von 2,5 dpt. Die Istaddition des Brillenglases ist 2,1 dpt.

Das in Fig. 5 gezeigte Brillenglas wurde mittels einer Optimierung einer Zielfunktion erhalten, in welcher als Sollvorgabe die Sollastigmatismusverteilung nach einem Start- bzw. Basisdesign für eine Nennaddition von 2,5 dpt eingeht. Aus diesem Start- bzw. Basisdesign werden Designs bzw. Sollastigmatismusverteilungen für weitere Additionen mittels einer Multiplikation mit einem Skalierungsfaktor abgeleitet und entsprechende Brillengläser nach den abgeleiteten Designvorgaben berechnet bzw. optimiert.

Fig. 6a und 7a zeigen jeweils die Verteilungen des tatsächlichen (Ist-) Astigmatismus zweier progressiver Brillengläser mit jeweils einer Addition von 1,25 dpt (Fig. 6) und einer Addition von 3,00 dpt (Fig. 7a), welche nach den abgeleiteten Designvorgaben bzw. Sollastigmatismusverteilungen berechnet worden sind. Der Brechungsindex und die sphärische Wirkung der in Fig. 6a, 6b, 7a und Fig. 7b gezeigten Brillengläser sind gleich dem Brechungsindex (1,6) und der sphärischen Wirkung (+0,5 dpt) des in Fig. 5 gezeigten Brillenglases.

Das Design bzw. die Sollastigmatismusverteilung für das in Fig. 6a gezeigte Brillenglas, wurde mittels einer Multiplikation der Sollastigmatismusverteilung für das in Fig. 5 gezeigte Brillenglas mit einem Skalierungsfaktor

$s = \dfrac{1,05}{2,1} = 0,5$ erzeugt bzw. berechnet, wobei bei der Berechnung des Skalierungsfaktors s die Istadditionen des jeweiligen Brillenglases berücksichtigt werden.

Das Design bzw. die gezeigte Sollastigmatismusverteilung für das in Fig. 7a gezeigte Brillenglas wurde mittels einer Multiplikation der Sollastigmatismusverteilung für das in Fig. 5 gezeigte Brillenglas mit einem Skalierungsfaktor

$s = \dfrac{2,6}{2,1} = 1,2$ erzeugt, wobei bei der Berechnung des Skalierungsfaktors s die Istadditionen des jeweiligen Brillenglases berücksichtigt wurde.

Wie aus einem Vergleich der Figuren 6a und 6b sowie 7a und 7b ersichtlich, sind die optischen Eigenschaften (insbesondere Ist-Astigmatismus) der nach dem erfindungsgemäßen Verfahren berechneten progressiven Brillengläser überraschenderweise vergleichbar mit den optischen Eigenschaften von progressiven Brillengläsern, welche nach einem konventionellen Verfahren, d.h. durch Ermittlung und Festlegung von Sollastigmatismuswerten eigens für jede Addition, berechnet worden sind.

Mit dem erfindungsgemäßen Verfahren können somit schnell, effizient und in einfacher Weise progressive Brillengläser für beliebige Additionen berechnet und anschließend hergestellt werden. Das Verfahren eignet sich somit insbesondere für Online-Berechnen und Optimieren von Brillengläsern auf Kundenbestellung (d.h. entsprechend den Vorgaben eines bestimmten Brillenträgers).

**Patentansprüche**

1. Computerimplementiertes Verfahren zum Erzeugen bzw. Berechnen eines Designs für ein progressives Brillenglas mit einer Addition *Add*, wobei das Design eine Sollastigmatismusverteilung $A_{Add}(u, y)$ für die Addition *Add* umfaßt, wobei das Verfahren zum Erzeugen bzw. Berechnen eines Designs folgende Schritte umfaßt:

    - Festlegen eines Startdesigns umfassend:

        - Vorgaben für den Verlauf einer Hauptlinie;
        - eine Start-Sollastigmatismusverteilung $A_{Add_B}(u, y)$ für eine vorgegebene Basisaddition $Add_B$, wobei $Add_B \neq Add$ ist;

        - Berechnen der Sollastigmatismusverteilung $A_{Add}(u, y)$ für die Addition *Add* mittels einer Transformation der Start-Sollastigmatismusverteilung $A_{Add_B}(u, y)$, wobei die Transformation der Start-Sollastigmatismusverteilung

$A_{Add_B}(u, y)$ eine Multiplikation $sA_{Add_B}(u, y)$ der Start-Sollastigmatismusverteilung $A_{Add_B}(u, y)$ mit einem Skalierungsfaktor s umfaßt,

und wobei

$$s = t\,\frac{Add}{Add_B}\,;$$

$t$ einen Faktor bezeichnet, welcher eine Funktion $t = t(Add, F, Add_B)$ der vorgegebenen Addition $Add$ und/oder der Fernteilwirkung $F$ und/oder der Basisaddition $Add_B$ ist, wobei $t = 1$ für $Add = Add_B$ gilt; und
$x$ die horizontale Koordinate;
$y$ die vertikale Koordinate; und
u den horizontalen Abstand eines Punktes $(x, y)$ von der Hauptlinie; wobei auf der Hauptlinie $u = 0$ gilt;

bezeichnen.

2. Verfahren nach Anspruch 1, wobei $A_{Add}(u, y) = SA_{Add_B}(u, y)$ gilt.

3. Verfahren nach Anspruch 1 oder 2, wobei die Werte der Funktion $t(F, Add, Add_B)$ mittels einer zweidimensionalen Interpolation zwischen vorgegebenen Grenzwerten der Funktion $t$ ermittelt werden.

4. Verfahren nach einem der vorangegangenen Ansprüche, wobei $t = t(Add, Add_B)$ eine Funktion der vorgegeben Addition und der Basisaddition ist.

5. Verfahren nach einem der vorangegangenen Ansprüche, wobei $t = const = 1$.

6. Verfahren nach einem der vorangehenden Ansprüche, ferner umfassend einen Schritt des Anpassens von wirkungsspezifischen Brillengrößen, wobei die wirkungsspezifischen Brillengrößen die Basiskurve, das Dickenreduktionsprisma, die Glasdicke und/oder die Brechwertzunahme umfassen.

7. Vorrichtung zum Erzeugen bzw. Berechnen eines Designs für ein progressives Brillenglas mit einer Addition $Add$, wobei das berechnende Design eine Sollastigmatismusverteilung $A_{Add}(u, y)$ für die Addition $Add$ umfaßt, wobei die Vorrichtung:

   - Mittel zur Vorgabe eines Startdesigns umfassend:

     - Vorgaben für den Verlauf einer Hauptlinie;
     - eine Start-Sollastigmatismusverteilung $A_{Add_B}(u, y)$ für eine vorgegebene Basisaddition $Add_B$, wobei $Add_B \neq Add$ ist; und

   - Berechnungsmittel, welche ausgelegt sind, ein Berechnen der Sollastigmatismusverteilung $A_{Add}(u, y)$ für die Addition $Add$ mittels einer Transformation der Start-Sollastigmatismusverteilung $A_{Add_B}(u, y)$, durchzuführen, wobei die Transformation der Start-Sollastigmatismusverteilung $A_{Add_B}(u, y)$ eine Multiplikation $sA_{Add_B}(u, y)$ der Start-Sollastigmatismusverteilung $A_{Add_B}(u, y)$ mit einem Skalierungsfaktor s umfaßt,

   umfasst, wobei:

$$s = t\,\frac{Add}{Add_B}\,;$$

$t$ einen Faktor bezeichnet, welcher eine Funktion $t = t(Add, F, Add_B)$ der vorgegebenen Addition $Add$ und/oder der Fernteilwirkung $F$ und/ oder der Basisaddition $Add_B$ ist, wobei $t = 1$ für $Add = Add_B$ gilt; und
$x$ die horizontale Koordinate;

*y* die vertikale Koordinate;

*u* den horizontalen Abstand eines Punktes *(x, y)* von der Hauptlinie;

bezeichnen.

**8.** Computerprogrammerzeugnis, welches ausgelegt ist, wenn geladen und ausgeführt auf einem Computer, ein Verfahren zum Erzeugen bzw. Berechnen eines Designs für ein progressives Brillenglas gemäß einem der Ansprüche 1 bis 6 durchzuführen.

**9.** Speichermedium mit darauf gespeichertem Computerprogramm, wobei das Computerprogramm ausgelegt ist, wenn geladen und ausgeführt auf einem Computer, ein Verfahren zum Erzeugen bzw. Berechnen eines Designs für ein progressives Brillenglas gemäß einem der Ansprüche 1 bis 6 durchzuführen.

**10.** Verfahren zum Herstellen eines individuellen progressiven Brillenglases mit einer vorgegebenen Addition *Add* umfassend:

- Berechnen eines Designs für das progressive Brillenglas mit der Addition *Add* nach dem Verfahren zum Erzeugen bzw. Berechnen eines Designs gemäß einem der Ansprüche 1 bis 6; und
- Berechnen bzw. Optimieren des progressiven Brillenglases nach dem berechneten Design.

**11.** Verfahren gemäß Anspruch 10, wobei die Berechnung bzw. Optimierung des Brillenglases ferner unter Berücksichtigung von individuellen Daten des Brillenträgers erfolgt.

**12.** Vorrichtung zum Herstellen eines progressiven Brillenglases mit einer vorgegebenen Addition *Add* , umfassend

- Designberechnungsmittel, welche ausgelegt sind, ein Design für das progressive Brillenglas mit der Addition *Add* nach dem Verfahren zum Erzeugen bzw. Berechnen eines Designs gemäß einem der Ansprüche 1 bis 6 zu berechnen; und
- Optimierungs- bzw. Berechnungsmittel, welche ausgelegt sind, ein Berechnen bzw. Optimieren des progressiven Brillenglases nach dem berechneten Design durchzuführen.

**13.** Computerprogrammerzeugnis, welches ausgelegt ist, wenn geladen und ausgeführt auf einem Computer, ein Verfahren zum Berechnen und Optimieren eines progressiven Brillenglases mit einer vorgegebenen Addition *Add* durchzuführen, wobei das Verfahren folgende Schritte umfaßt

- Berechnen eines Designs für das progressive Brillenglas mit der Addition *Add* nach dem Verfahren zum Erzeugen bzw. Berechnen eines Designs gemäß einem der Ansprüche 1 bis 6;
- Berechnen bzw. Optimieren des Brillenglases nach dem berechneten Design.

**14.** Speichermedium mit darauf gespeichertem Computerprogramm, wobei das Computerprogramm ausgelegt ist, wenn geladen und ausgeführt auf einem Computer, ein Verfahren zum Berechnen und Optimieren eines Brillenglases durchzuführen, wobei das Verfahren folgende Schritte umfaßt

- Berechnen eines Designs für das progressive Brillenglas nach dem Verfahren zum Erzeugen bzw. Berechnen eines Designs für ein progressives Brillenglas gemäß einem der Ansprüche 1 bis 6;
- Berechnen bzw. Optimieren des Brillenglases nach dem berechneten Design.

**Claims**

**1.** Computer-implemented method for generating or computing a design for a progressive spectacle lens with an addition *Add,* wherein the design comprises a target astigmatism distribution $A_{Add}(u, y)$ for the addition *Add,* wherein the method for generating or computing a design comprises the following steps:

• establishing an initial design comprising:

○ preset values for the course of a principal line;
○ an initial target astigmatism distribution $A_{AddB}(u, y)$ for a preset base addition $Add_B$, wherein $Add_B \neq Add$;

• computing the target astigmatism distribution $A_{Add}$ (u, y) for the addition *Add* by means of a transformation of the initial target astigmatism distribution $A_{Add\,B}$ (u, y), wherein the transformation of the initial target astigmatism distribution $A_{AddB}$ (u, y) comprises a multiplication $sA_{AddB}$ (u, y) of the initial target astigmatism distribution $A_{AddB}$ (u, y) with a scaling factor *s*,

and wherein

$$s = t\,\frac{Add}{Add_B};$$

*t* denotes a factor, which is a function $t = t(Add, F, Add_B)$ of the preset addition *Add* and/or the distance field effect F and/or the base addition $Add_B$, wherein *t = 1* for *Add = $Add_B$*; and
*x* denotes the horizontal coordinate;
*y* denotes the vertical coordinate; and
*u* denotes the horizontal spacing of a point (*x, y*) from the principal line; wherein
*u* = 0 applies on the principal line.

2.  Method according to claim 1, wherein $A_{Add}(u, y) = sA_{AddB}$ (*u, y*).

3.  Method according to claim 1 or 2, wherein the values of the function $t(Add, F, Add_B)$ are determined by means of a two-dimensional interpolation between preset limit values of the function *t*.

4.  Method according to one of the preceding claims, wherein $t = t(Add, F, Add_B)$ is a function of the preset addition and the base addition.

5.  Method according to one of the preceding claims, wherein *t = const = 1*.

6.  Method according to one of the preceding claims, additionally comprising a step of matching spectacle sizes of specific effect, wherein the spectacle sizes of specific effect include the base curve, the thickness reduction prism, the lens thickness and/or the power increase.

7.  Device for generating or computing a design for a progressive spectacle lens with an addition *Add,* wherein the computational design comprises a target astigmatism distribution $A_{Add}$ (u, y) for the addition *Add,* wherein the device comprises:

    • means for establishing an initial design comprising:

        o preset values for the course of a principal line;
        o an initial target astigmatism distribution $A_{AddB}$ (u, y) for a preset base addition $Add_B$, wherein $Add_B \neq Add$; and

    • computing means, which are designed to perform a computation of the target astigmatism distribution $A_{Add}$ (u, y) for the addition *Add* by means of a transformation of the initial target astigmatism distribution $A_{AddB}$ (u, y), wherein the transformation of the initial target astigmatism distribution $A_{AddB}$ (u, y) comprises a multiplication $sA_{AddB}$ (u, y) of the initial target astigmatism distribution $A_{AddB}$ (u, y) with a scaling factor s,

    and wherein

$$s = t\,\frac{Add}{Add_B};$$

    *t* denotes a factor, which is a function $t = t(Add, F, Add_B)$ of the preset addition *Add* and/or the distance field effect F and/or the base addition $Add_B$, wherein *t = 1* for *Add = $Add_B$;* and
    *x* denotes the horizontal coordinate;
    *y* denotes the vertical coordinate; and
    *u* denotes the horizontal spacing of a point (*x, y*) from the principal line.

8. Computer program product, which, when loaded and performed on a computer, is designed to perform a method for generating or computing a design for a progressive spectacle lens according to one of claims 1 to 6.

9. Storage medium with computer program stored therein, wherein the computer program, when loaded and performed on a computer, is designed to perform a method for generating or computing a design for a progressive spectacle lens according to one of claims 1 to 6.

10. Method for producing an individual progressive spectacle lens with a preset addition *Add* comprising:

   • computing a design for the progressive spectacle lens with the addition *Add* using the method for generating or computing a design according to one of claims 1 to 6; and
   • computing or optimising the progressive spectacle lens according to the computed design.

11. Method according to claim 10, wherein the computation or optimisation of the spectacle lens additionally occurs with consideration of individual data of the spectacle wearer.

12. Method for producing a progressive spectacle lens with a preset addition *Add* comprising:

   • design computing means, which are designed to compute a design for the progressive spectacle lens with the addition *Add* using the method for generating or computing a design according to one of claims 1 to 6; and
   • optimising or computing means, which are designed to conduct a computation or optimisation of the progressive spectacle lens according to the computed design.

13. Computer program product, which, when loaded and performed on a computer, is designed to perform a method for computing and optimising a progressive spectacle lens with a preset addition *Add*, wherein the method comprises the following steps:

   • computing a design for the progressive spectacle lens with the addition *Add* using the method for generating or computing a design according to one of claims 1 to 6;
   • computing or optimising the spectacle lens according to the computed design.

14. Storage medium with computer program stored therein, wherein the computer program, when loaded and performed on a computer, is designed to perform a method for computing and optimising a spectacle lens with a preset addition *Add*, wherein the method comprises the following steps:

   • computing a design for the progressive spectacle lens using the method for generating or computing a design for a progressive spectacle lens according to one of claims 1 to 6;
   • computing or optimising the spectacle lens according to the computed design.

**Revendications**

1. Procédé mis en oeuvre sur ordinateur pour produire et/ou calculer un design de verre de lunettes progressif avec une addition *Add*, sachant que le design comprend une répartition d'astigmatisme de consigne $A_{Add}$ (u, y) pour l'addition Add,
   le procédé pour produire et/ou calculer un design comprenant les étapes suivantes :

   - spécification d'un design de départ comprenant :

      -- des données pour l'allure d'une ligne principale ;
      -- une répartition d'astigmatisme de consigne de départ $A_{AddB}$ (u, y) pour une addition de base prédéterminée $Add_B$, sachant que $Add_B$ est $\neq$ de Add ;

   - calcul de la répartition d'astigmatisme de consigne $A_{Add}$ (u, y) pour l'addition Add à l'aide d'une transformation de la répartition d'astigmatisme de consigne de départ $A_{AddB}$ (u, y), sachant que la transformation de la répartition d'astigmatisme de consigne de départ $A_{AddB}$ (u, y) comprend une multiplication $sA_{AddB}$ (u, y) de la répartition d'astigmatisme de consigne de départ $A_{AddB}$ (u, y) avec un facteur d'échelle s,

et sachant que

$$s = t \times (Add/Add_B) \; ;$$

t désignant un facteur, qui est une fonction t = t(Add, F, Add$_B$) de l'addition prédéterminée Add et/ou de l'action en région de vision à distance F et/ou de l'addition de base Add$_B$, t = 1 pour Add = Add$_B$ ; et
x désignant la coordonnée horizontale ;
y la coordonnée verticale ; et
u l'écart horizontal d'un point (x, y) par rapport à la ligne principale ; sachant que, sur la ligne principale, u = 0.

2. Procédé selon la revendication 1, sachant que A$_{Add}$ (u, Y) = SA$_{AddB}$ (u, y).

3. Procédé selon la revendication 1 ou 2, sachant que les valeurs de la fonction t(F, Add, Add$_B$) sont déterminées à l'aide d'une interpolation bidimensionnelle entre les valeurs-limites prédéterminées de la fonction t.

4. Procédé selon l'une quelconque des revendications précédentes, sachant que t = t(Add, Add$_B$) est une fonction de l'addition prédéterminée et de l'addition de base.

5. Procédé selon l'une quelconque des revendications précédentes, sachant que t = const = 1.

6. Procédé selon l'une quelconque des revendications précédentes, comprenant en outre une étape pour l'adaptation de tailles de lunettes à action spécifique, sachant que les tailles de lunettes à action spécifique comprennent la courbe de base, le prisme de réduction d'épaisseur, l'épaisseur du verre et/ou l'augmentation de l'indice de réfraction.

7. Procédé pour produire et/ou calculer un design de verre de lunettes progressif avec une addition Add, sachant que le design à calculer comprend une répartition d'astigmatisme de consigne A$_{Add}$ (u, y) pour l'addition Add, sachant que le dispositif comprend :

   - des moyens destinés à la spécification d'un design de départ, incluant:

      -- des données pour l'allure d'une ligne principale ;
      -- une répartition d'astigmatisme de consigne de départ A$_{Aaas}$ (u, y) pour une addition de base prédéterminée Add$_B$, sachant que Add$_B$ est $\neq$ de Add ; et

   - des moyens de calcul, qui sont formulés de façon à pouvoir effecteur un calcul de la répartition d'astigmatisme de consigne A$_{Add}$ (u, y) pour l'addition Add, à l'aide d'une transformation de la répartition d'astigmatisme de consigne de départ AA$_{ddB}$ (u, y), sachant que la transformation de la répartition d'astigmatisme de consigne de départ A$_{AddB}$ (u, y) comprend une multiplication sA$_{AddB}$ (u, y) de la répartition d'astigmatisme de consigne de départ A$_{AddB}$ (u, y) avec un facteur d'échelle s,

   et sachant que

$$s = t \times (Add/Add_B) \; ;$$

t désignant un facteur, qui est une fonction t = t (Add, F, Add$_B$) de l'addition prédéterminée Add et/ou de l'action en région de vision à distance F et/ou de l'addition de base Add$_B$, t = 1 pour Add = Add$_B$ ; et
x désignant la coordonnée horizontale ;
y la coordonnée verticale ; et
u l'écart horizontal d'un point (x, y) par rapport à la ligne principale.

8. Produit de programme informatique, qui est formulé de façon à ce que, une fois chargé et exécuté sur un ordinateur, il permette d'exécuter un procédé pour produire et/ou calculer un design pour un verre de lunettes progressif selon l'une quelconque des revendications 1 à 6.

**9.** Support de sauvegarde sur lequel est enregistré le programme d'ordinateur, sachant que le programme d'ordinateur est formulé de façon à ce que, une fois chargé et exécuté sur un ordinateur, il permette d'exécuter un procédé pour produire et/ou calculer un design pour un verre de lunettes progressif selon l'une quelconque des revendications 1 à 6.

**10.** Procédé pour fabriquer un verre de lunettes progressif individuel ayant une addition prédéterminée Add comprenant:

- le calcul d'un design pour le verre de lunettes progressif avec l'addition Add selon le procédé pour produire et/ou calculer un design selon l'une quelconque des revendications 1 à 6 ; et
- le calcul et/ou l'optimisation du verre de lunettes progressif selon le design calculé.

**11.** Procédé selon la revendication 10, sachant que le calcul et/ou l'optimisation se fait en outre en tenant compte des données individuelles du porteur de lunettes.

**12.** Procédé pour fabriquer un verre de lunettes progressif avec une addition prédéterminée Add, comprenant:

- des moyens de calcul de design, qui sont formulés pour calculer un design pour un verre de lunettes progressif avec l'addition Add selon le procédé pour produire et/ou calculer un design selon l'une quelconque des revendications 1 à 6 ; et
- des moyens d'optimisation et/ou de calcul, qui sont formulés de façon à pouvoir effectuer un calcul et/ou une optimisation du verre de lunettes progressif selon le design calculé.

**13.** Produit de programme informatique qui est formulé de façon à ce que, une fois chargé et exécuté sur un ordinateur, il permette d'exécuter un procédé pour le calcul et l'optimisation d'un verre de lunettes progressif avec une addition Add prédéterminée, le procédé comprenant les étapes suivantes

- le calcul d'un design pour le verre de lunettes progressif avec l'addition Add selon le procédé pour produire et/ou calculer un design selon l'une quelconque des revendications 1 à 6 ; et
- le calcul et/ou l'optimisation du verre de lunettes progressif selon le design calculé.

**14.** Milieu de sauvegarde sur lequel est enregistré un programme d'ordinateur, sachant que le programme d'ordinateur est formulé de façon à ce que, une fois chargé et exécuté sur un ordinateur, il permette d'effectuer un procédé pour le calcul et l'optimisation d'un verre de lunettes, le procédé comprenant les étapes suivantes

- le calcul d'un design pour le verre de lunettes progressif selon le procédé pour produire et/ou calculer un design pour un verre de lunettes progressif selon l'une quelconque des revendications 1 à 6 ;
- le calcul et/ou l'optimisation du verre de lunettes progressif selon le design calculé.

Fig. 1

Soll-Astigmatismus

Fig. 2a

Fig. 2b

Soll-Astigmatismus

Fig. 3a

Fig. 3b

Soll-Astigmatismus

Fig. 4a

Astigmatismus (Kom. Glas+Auge)

Fig. 4b

Astigmatismus (Kom. Glas+Auge)

Fig. 5

Astigmatismus (Kom. Glas+Auge)

Fig. 6a

Astigmatismus (Kom. Glas+Auge)

Fig. 6b

Fig. 7a

Astigmatismus (Kom. Glas+Auge)

Fig. 7b

**IN DER BESCHREIBUNG AUFGEFÜHRTE DOKUMENTE**

**In der Beschreibung aufgeführte Patentdokumente**

- EP 1277079 A

- EP 2008000585 W